# EUROPEAN PATENT APPLICATION

(11) **EP 1 327 721 A1**
(43) Date of publication of application: **16.07.2003**
(21) Application number: 03000197.8
(22) Date of filing: 07.01.2003
(51) Int. Cl.: E02F 3/43, A01D 34/86, A01D 34/66

(54) **Safety device for articulated arm**

(30) Priority: 09.01.2002 IT BO20020007
(71) Applicant: Ferri S.rl., 44030 Tamara (Ferrara) (IT)
(72) Inventor: Ferri, Sandro, 44100 Ferrara (IT)
(74) Representative: Negrini, Elena

(57) **Abstract**

A safety device for articulated arm (2) supporting a tool (30) and having a base mean (3) connected to a vehicle (31) and having a plurality of elements, at least first (4) and second (5), which are cascade articulated to the vehicle and provided with related actuators, at least first (6) and second (7), operated by at least a hydraulic circuit (33) and respectively fit for regulating the angles between the base mean (3) and the first element (4) and between the latter and the second element (5).

The device (1) includes at least first inclination sensor means (8) fixed to the second element (5) and connected to the commutation means (10) connected to the hydraulic circuit (33) for commuting the arm (2) between a rigid operation condition (R), and a compliant operation condition (C), in which at least an actuator (6, 7) reacts to forces longitudinal thereto, respectively in a substantially rigid way in both the directions and in a compliant way only to the forces having direction corresponding to a tool raising.

## Description

The present invention relates to safety devices for agricultural tools.

The invention refers to a safety device for articulated arm particularly for agriculture and green maintenance fit to be assembled or integrated to a vehicle such a truck, towing, tractor, wagon, and the like for moving and operating a tool, for instance a mower with rotating bar or blades, a milling cutter, a shredder, a slicer and similar.

The known arms are generally provided with a base portion, fit to be connected to the vehicle or integrated thereto, and to which a plurality of reciprocally articulated elements, more frequently two, are connected in cascade. The angles between the base portion and the first element and between the latter and the second element, are regulated by related and interposed actuators, generally consisting of double-acting hydraulic cylinders.

The double-acting cylinders transmit forces for rotating related elements and avoid uncontrolled and dangerous turnovers of the arm, when barycenter projection thereof on the horizontal plan passes from one part to the other part with respect to the articulation between the base portion and the first element.

In the operation of the arm known in particular operational conditions, for instance in correspondence of the cut of vegetables in proximity of the ground, in order to avoid that the ground can damage the tool because the impacts due to ground irregularities or asperities, the first actuator must not prevent the raising of the tool and therefore of the arm. For such purpose, in this kind of operational condition, the first actuator of the known arms has the support function from the lower part by operating, for instance, single-acting to allow the arm to move upwards, in correspondence of impacts of the tool against the ground, avoiding damages and harmful stress transmissions to the vehicle.

There are known safety devices for an arm provided with a manually operated valve mean for commutating the operation of the first actuator from single acting to double acting. For instance, in correspondence of the vegetables cut in proximity of the ground or obstacles, an operator commutes the operation of the first actuator to single-acting in order to avoid damages due to impacts of the tool with the ground or with the obstacles and, in correspondence of the tree foliage cut in high positions, the operator commutes the operation of the first actuator to double-acting, in order to avoid that the arm can turn over to the opposite part with respect to the vehicle.

The main drawback of known devices consists in that the operation commutation of the first actuator, from single to double-acting and vice versa, is delegated to the operator's memory and sensibility, with the risk of dangerous omissions or operational errors.

There are known safety devices for an arm which differ from the above described devices in that they include a cam which, in correspondence of an angle between the base portion and the first element of the arm higher than a predetermined value, for instance 60°, operates the valve mean commuting the operation of the first actuator from single to double-acting and vice versa.

The main drawback of these last known devices consists in that they can commute the first actuator in the wrong operational mode. In some operational conditions, for instance when the vehicle move on in proximity of a ground elevation on which the tool effects the cut, the first element of the arm can be perpendicular or approximately perpendicular with respect to the base portion, causing the commutation of the operation to double-acting without risks of arm turnover, while possible impacts of the tool against the ground cannot be absorbed by the arm raising, with risks of damage.

The main object of the present invention is to propose a device fit for commutating the arm operation between a rigid condition and a compliant condition according to the safety demands in order to guarantee the better protection of operator, vehicle and arm with related tool.

Further object is to propose a very reliable device, having an economic realization.

The above-mentioned objects are achieved according to the content of the claims.

The characteristics of the invention are underlined in the following with particular reference to the attached drawings, in which:
- figure 1 shows a schematic back view of a vehicle having an articulated arm provided with the device object of the present invention, in a compliant operation condition for cutting vegetables positioned at the top of an embankment lateral with respect to the vehicle;

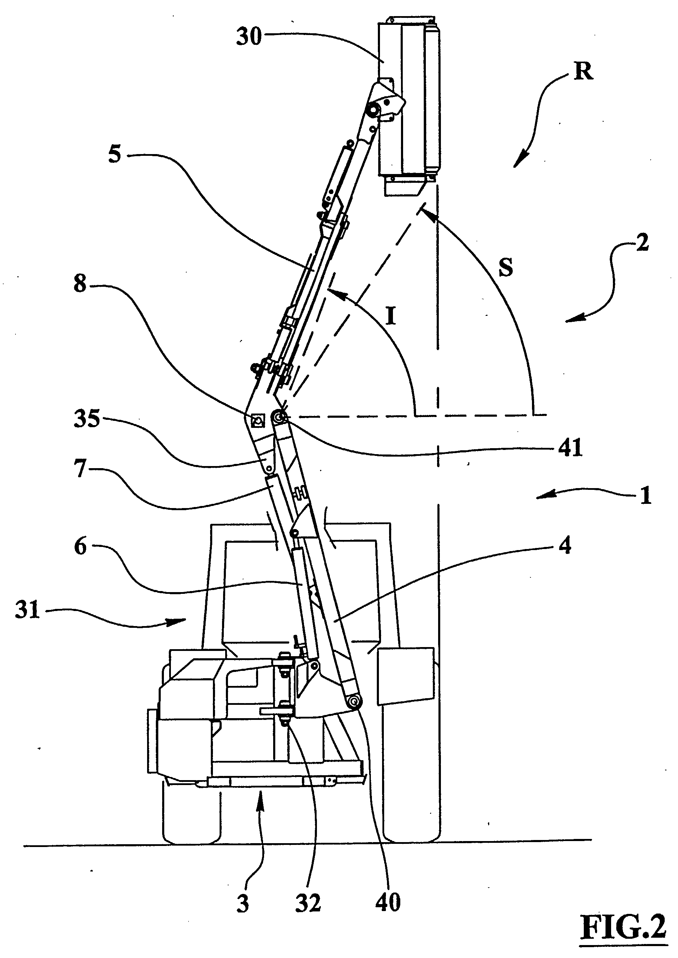

- figure 2 shows a back view of the figure 1 vehicle with the arm almost completely raised, in a rigid operation condition;

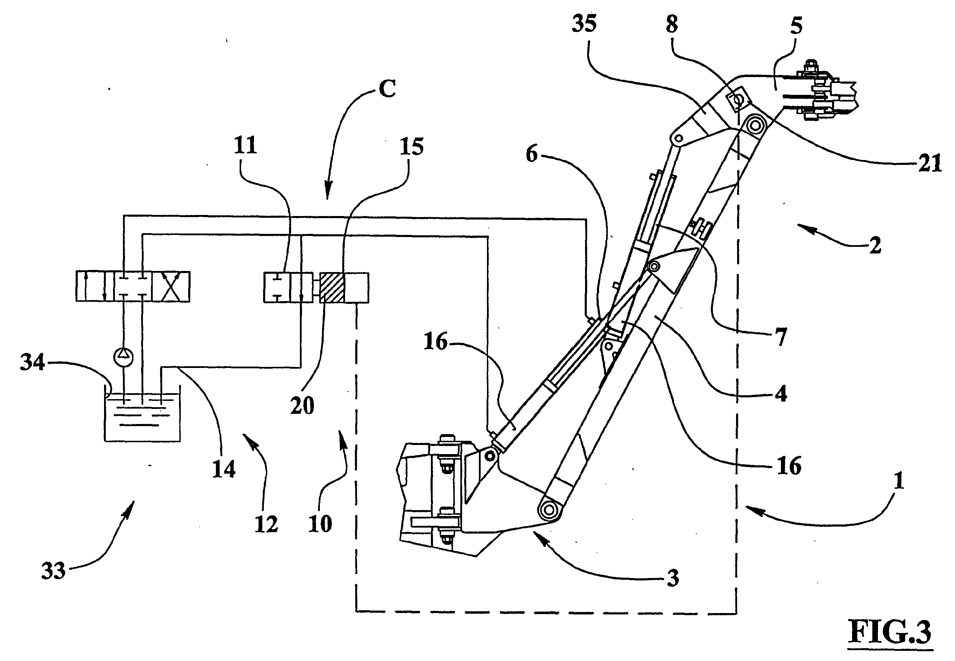

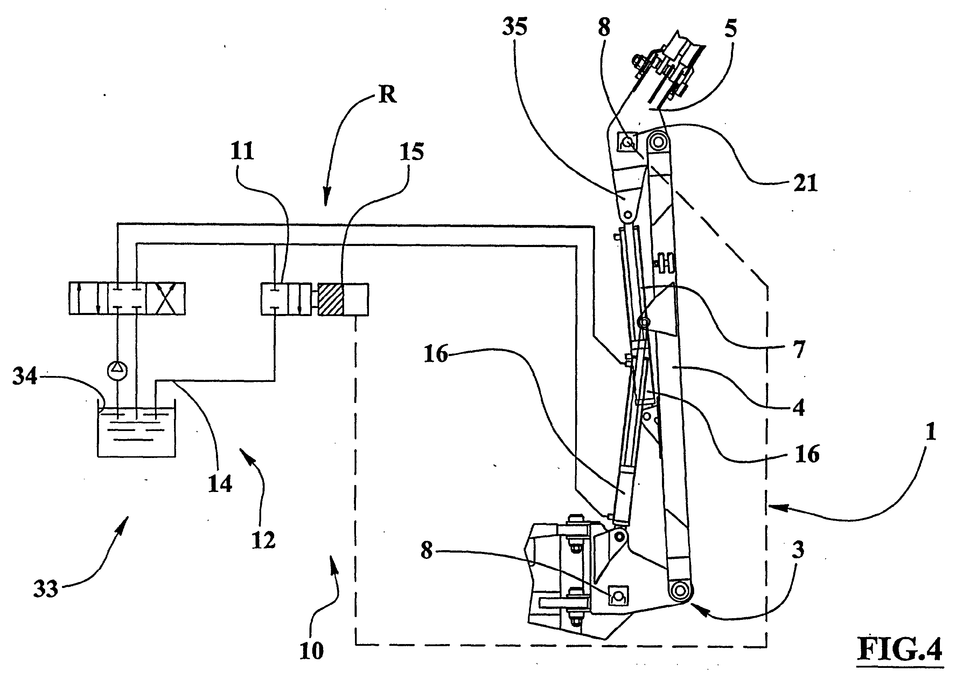

- figures 3 and 4 show, in schematic not to scale views, a hydraulic circuit of the device, associated to the arm, respectively in the compliant and rigid operation conditions and in which some parts have been removed for better underlining others;
- figure 5 shows a variant of the device in the rigid condition.

With reference to figures from 1 to 4, numeral 1 indicates the safety device, object of the present invention, for an articulated arm 2 associated to a vehicle 31, consisting of a tractor, for supporting and moving a tool 30, generally consisting of a knife shredder for bushes, branches and vegetable.

The arm 2 has a base mean 3, rigidly connected to the vehicle 31, and to which elements, first 4 and second 5, are cascade articulated.

The base mean 3 has an articulated joint 32 for the rotation of the elements 4, 5 on an axis nearly perpendicular to the plane, defined by the vehicle 31 or by the axles thereof.

The ends of the first element 4 are rotatably articulated to the base means 3 and to the second element 5, through respective pins 40, 41 almost parallel to the plane defined by the vehicle 31.

The second element 5 is provided with a plurality of articulated segments, but can be of telescopic, rigid or similar type.

The angles between the base mean 3 and the first element 4 and between this latter and the second element 5, are regulated by related actuators respectively first 6 and second 7, operated by at least a hydraulic circuit 33, partially illustrated.

The second element 5 form with the horizontal plane an inclination angle I, which in real operational conditions assumes negative values, for instance when the arm 2 is lowered for allowing the tool 30 to operate in a ditch at the side of a road along which the vehicle 31 runs, void value, when the arm 2 is horizontal, or increasing positive values in correspondence of the arm raising.

Each actuator, first 6 and second 7, consists of a double-acting hydraulic jack. It is also provided that each actuator 6, 7 consists of a couple of double-acting jacks set in parallel or of a couple of single-acting jacks, one inverted in comparison to the other one.

Each actuator 6, 7 has a cylindrical body partitioned in two chambers by a piston whose stem crosses one of said chambers.

The free end of the stem of the second actuator 7 is fixed to an extension 35 of the second element 5 protruding with respect to the pivot 41 joining the elements 4, 5 and the free ends of the body is fixed to the first element 4.

The first actuator 6 has the free end of the cylindrical body, corresponding to the chamber 16 not crossed by the stem, fixed to the base means 3; while the free end of the stem of the last actuator 6 is fixed to the first element 4.

The device 1 includes first inclination sensor means 8 linked to commutation means 10 connected to the hydraulic circuit 33.

The first inclination sensor means 8 are of mercury circular bulb type and they are fixed to the second element 5 in adjustable way by regulation means 21. Alternatively, it is provided that the fixing of the inclination sensor means 8 to the second element 5 is rigid.

The commutation means 10 include operating means 15, having electric means 20 consisting of a solenoid controlled by the inclination sensor means 8, for commutating valve means 11.

The commutating valve means 11 alternatively put in connection the free stem chamber 16 of the first actuator 6 to the hydraulic circuit 33 or in flow communication with compliant means 12 consisting in a feeding duct 14 for a tank 34 at atmospheric pressure of the liquid of the hydraulic circuit 33.

When the chamber 16 is in connection with the hydraulic circuit 33, the first actuator 6 rigidly reacts, in both longitudinal directions, to the stresses which are transmitted thereto by the arm 2. In fact, the piston is completely blocked by the incompressible liquid of the two chambers, whose flow is stopped, or generated, by the circuit 33, realizing a rigid operation condition R of the arm 2.

When the room 16 is in flow connection with the tank 34, the liquid of this last chamber can flow to the tank 34, allowing the translation of the piston in the chamber 16. Consequently, the first actuator 6 reacts in compliant way to possible rotations of the elements 4, 5 caused by impacts of the tool 30 against the ground, providing a compliant operation condition C of the arm 2.

The first inclination sensor means 8 command the commutation from compliant operation condition C to rigid operation condition R, in correspondence of the passage of the value of the angle I from a value smaller to a bigger value than predefined limit value S, adjustable by the regulation means 21, for instance to take into account the particular environmental conditions or the weight of different types of tools 30.

The operation of the device 1 provides that, in correspondence of working operations in which the tool 30 is subject to impacts against ground or obstacles, and the second element 5 of the arm 2 has an inclination angle I smaller than the predefined value S, the same arm 2 is in the compliant operation condition C, in which the impacts effects of the tool 30 are minimized by the rotation of the arm 2, allowed by the free movement of the piston in the chamber 16 of the first actuator 6.

Then this latter, in the compliant operation condition C, reacts in compliant way to longitudinal forces with respect to the first actuator 6, corresponding to a raising of the tool 30 caused by impacts.

Vice versa, when the second element 5 is tilted of an angle I greater than the predefined value S, the arm 2 is in the rigid operation condition R, avoiding that the arm 2 can collapse at the opposed side of the vehicle for instance because of stresses endured by the vehicle 31 or of operational errors.

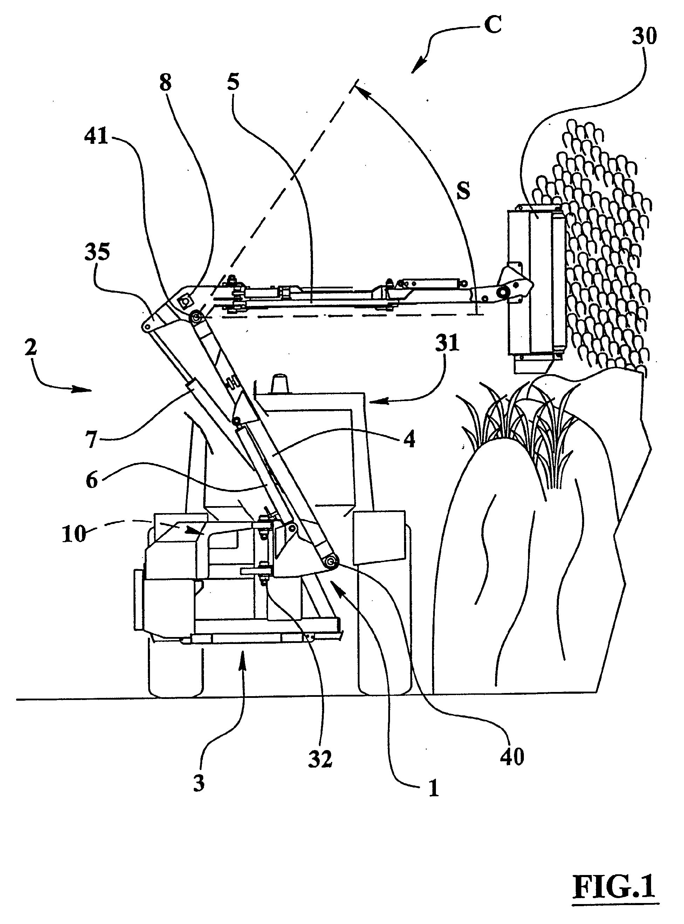

It is important to observe that the operation commutation according to the angle I between the second element 5 and the horizontal plane, advantageously also assures the correct operation in correspondence of particular operational conditions such as those of figure 1.

It is also provided that the inclination sensor means 8 are of solid state type and send a signal proportional to the angle I to an electric comparator of the driving means 15.

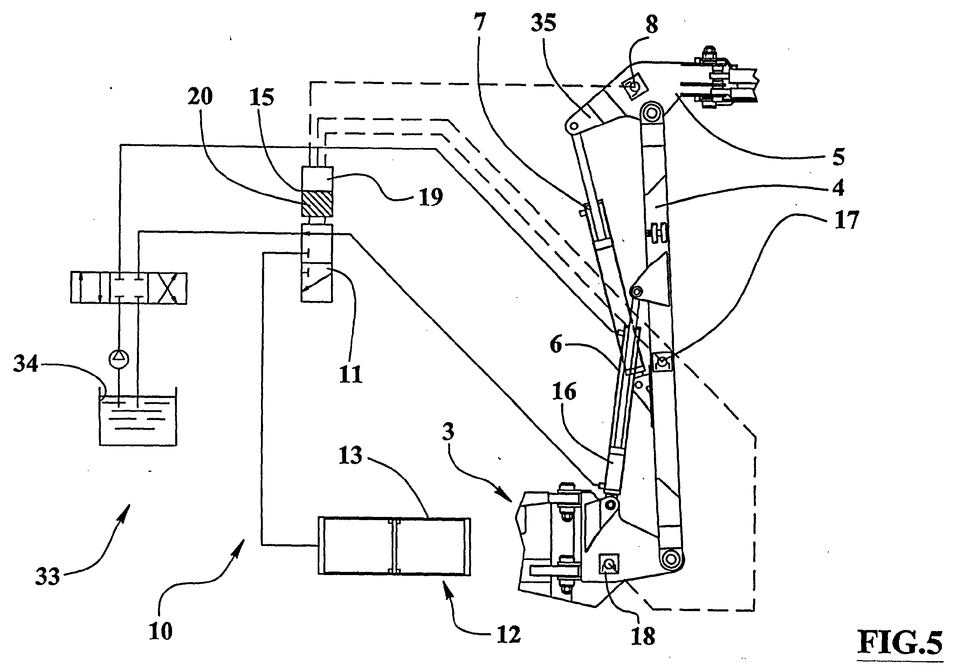

In the variant of the device 1 of figure 5, the compliant means 12 consist of elastic means 13 including a pressurized tank in which the liquid flow of the free chamber 16 is opposed by a piston subject to the pressure of a pressurized gas or by a helical spring.

The variant includes further second 17 and third 18 inclination sensor means, fixed respectively to the first element 4 and to the base mean 3.

The second 17 and third 18 inclination sensor means are connected to elaboration means 19, of digital type, of the driving means 15.

The elaboration means 19 are also connected to a sensor of longitudinal orientation, for instance a wire potentiometer, known and not shown, interconnected between the vehicle 31 and the arm 2 for measuring the angle of the latter with respect to the longitudinal axis of the vehicle 31.

The elaboration means 19 are fit to define the commutation of the operation conditions C, R of the arm and to generate alarm signals related to conditions close to the instability of the arm 4 and of the vehicle 31, according to calculation algorithms of the stability of these last ones.

It is also provided that one or both the chambers of the second actuator 7 have respective devices 1.

The main advantage of the present invention is to provide a device fit for automatically commuting the arm operation between a rigid condition and a compliant condition, according to the safety demands in order to guarantee the suitable protection of operator, vehicle and arm with related tool.

Further advantage is that to provide an economic device, simple and having reliable operation.

## Claims

1. Safety device for articulated arm (2) for a tool (30), having a base mean (3) connected to a vehicle (31), and having a plurality of elements, at least first (4) and second (5), which are cascade articulated to the vehicle and are provided with related actuators, at least first (6) and second (7), operated by at least a hydraulic circuit (33) and fit for regulating the angles respectively between the base mean (3) and the first element (4) and between this latter and the second element (5); said device (1) being **characterized in that** includes at least first inclination sensor means (8) fixed to the second element (5) and connected to commutation means (10) connected to the hydraulic circuit (33) for commuting the arm (2) between a rigid operation condition (R), and a compliant operation condition (C), in which at least an actuator (6, 7) reacts to forces longitudinal thereto, respectively in a substantially rigid way in both the directions and in a compliant way only to the forces having direction corresponding to a raising of the tool (30).

2. Device according to claim 1 **characterized in that** the commutation means (10) include driving means (15) of valve means (11) and in signal communication with the first inclination sensor means (8); the valve means (11) arranging at least a chamber (16) of at least an actuator (6, 7) in flow communication with compliant means (12), in correspondence of the compliant operation condition (C).

3. Device according to claim 2 **characterized in that** the first inclination sensor means (8) transmit to the driving means (15) commutation signals in the compliant operation condition (C) in correspondence of angles (I) of the second element (5) with the horizontal plane grater than a predefined value (S).

4. Device according to claim 3 **characterized in that** the first inclination sensor means (8) are fixed to the second element (5) by regulation means (21) of said predefined value (S).

5. Device according to claim 3 **characterized in that** the driving means (15) include electric means (20) for driving the valve means (11) and the first inclination sensor means (8) are of mercury type.

6. Device according to claim 2 **characterized in that** the compliant means (12) consist of one between elastic means (13) and a feeding duct (14) to a tank (34) of the circuit (33).

7. Device according to claim 6 **characterized in that** the elastic means (13) consist of a pressurized container.

8. Device according to claim 1 **characterized in that** includes second (17) and third (18) inclination sensor means respectively fixed to the first element (4) and to the base mean (3); the driving means (15) including elaboration means (19) for defining the operation commutation according to calculation algorithms of stability of at least one between arm (4) and vehicle (31).

9. Device according to claim 8 **characterized in that** the elaboration means (19) generate alarm signals in correspondence of conditions close to the instability of the arm (4) and the vehicle (31).
